# EUROPÄISCHE PATENTANMELDUNG

(11) **EP 3 378 297 A1**
(43) Veröffentlichungstag der Anmeldung: **26.09.2018**
(21) Anmeldenummer: 18401024.7
(22) Anmeldetag: 09.03.2018
(51) Int. Cl.: A01B 69/00

(54) **LANDWIRTSCHAFTLICHES TERMINAL**

(30) Priorität: 15.03.2017 DE 102017105489
(71) Anmelder: Amazonen-Werke H. Dreyer GmbH & Co. KG, 49205 Hasbergen (DE)
(72) Erfinder: Konermann, Thomas, 49479 Ibbenbüren (DE)

(57) **Zusammenfassung**

Terminal zur Steuerung einer landtechnischen Maschine, wobei das Terminal über einen Bildschirm und Eingabemittel, vorzugsweise einen berührungsempfindlichen Bildschirm, verfügt, wobei bei der ersten Inbetriebnahme des Terminals mittels eines Inbetriebnahmemenüs Informationen vom Nutzer zur Einstellung des landwirtschaftlichen Terminals abgefragt und Einstellparameter des Terminals entsprechend der jeweiligen Menüauswahl mittels der Eingabemittel eingestellt werden.

## Beschreibung

Die Erfindung betrifft ein Terminal zur Steuerung einer landtechnischen Maschine gemäß dem Oberbegriff des Patentanspruches 1.

Die zunehmende Komplexität landtechnischer Maschinen bedingt eine immer größere Detailtiefe von Einstellparametern dieser Maschinen. Um eine Bearbeitung mit der jeweiligen Maschine durchzuführen, muss also eine zunehmend große Anzahl von Parametern vor dem Beginn der Bearbeitung für die jeweils verwendete Maschine vorgewählt werden. Um diesen Prozess zu vereinfachen schlägt die US2014195126 vor, vor dem Beginn der Bearbeitung einen sogenannten Wizard zu starten, der dem Benutzer mittels der Beantwortung von eindeutigen Fragen eine manuelle Einstellung der jeweiligen Maschine abnimmt.

Ein derartiger Wizard ist allerdings nicht in der Lage dem Benutzer bei der Einstellung von Parametern des jeweils für die Steuerung der Maschine verwendeten Terminals zu helfen. Derartige Terminals sind eingerichtet, dem Benutzer Informationen über den Arbeitsprozess, die Arbeitsmaschine oder sonstige Informationen anzuzeigen und mittels Eingabemitteln eine Steuerung des Arbeitsprozesses bzw. der landtechnischen Maschine zu bewirken. Durch die zunehmende Komplexität der landtechnischen Maschinen ergibt sich ebenfalls für das verwendete Terminal eine immer größere Funktionenvielfalt und Konfigurationsmöglichkeiten, welche den Benutzer im Einzelfall überfordern kann.

Aufgabe der vorliegenden Erfindung ist es diesen Nachteil des Standes der Technik zu überwinden und ein landwirtschaftliches Terminal anzugeben, welches dem Benutzer einfachere Konfigurationsmöglichkeiten bietet.

Diese Aufgabe wird durch den kennzeichnenden Teil des Anspruchs 1 gelöst. Dementsprechend ist vorgesehen, dass bei der ersten Inbetriebnahme des Terminals mittels eines Inbetriebnahmemenüs Informationen vom Nutzer zur Einstellung des landwirtschaftlichen Terminals abgefragt und Einstellparameter des Terminals entsprechend der jeweiligen Menüauswahl mittels der Eingabemittel eingestellt werden. Es werden also bei der ersten Inbetriebnahme des Terminals dem Benutzer verschiedene Fragen gestellt bzw. Einstelloptionen zur Auswahl angeboten, um das Terminal entsprechend den Vorlieben des jeweiligen Benutzers optimal zu konfigurieren. Die gestellten Fragen und/oder Einstelloptionen können hierbei insbesondere Einstellungen die Anzeige von bevorzugten Informationen auf dem Terminal selbst betreffen, beispielsweise die bevorzugte Ansicht während des Bearbeitungsvorganges. Dies kann zum Beispiel eine GPS-Ansicht der bearbeiteten Fläche oder eine Anzeige von Parametern der landtechnischen Arbeitsmaschine sein. Es kann vorgesehen sein, dass der Benutzer diejenigen Informationen auswählen kann, die in der jeweiligen Anzeige dargestellt werden. Es kann sich hierbei beispielsweise um eine Geschwindigkeit, Ausbringrate eines Produkts, Arbeitsbreite, Restmenge eines Produkts in einem Behälter, Arbeitstiefe und weitere Informationen handeln. Auch die Anordnung der Informationen auf dem Bildschirm kann auswähl- bzw. einstellbar sein. Zusätzlich kann vorgesehen sein, bevorzugt zu verwendende landtechnische Maschinen anzugeben, welche vorzugsweise in Kombinationen mit dem verwendeten Terminal benutzt werden. Auch kann vorgesehen sein, Feldkarten derjenigen Felder zu laden, welche bevorzugt mit diesem Terminal bearbeitet werden. Es können auch Benutzerinformationen, wie Name und Adresse des jeweiligen Benutzers oder sonstige persönlich Daten eingegeben werden.

Da die bevorzugten Einstellungen in der Regel von dem jeweiligen Benutzer der landtechnischen Maschine abhängen, kann vorgesehen sein, dass das Inbetriebnahmemenü bei einem Wechsel des Benutzers erneut aufrufbar ist und die jeweilige Menüauswahl durch das Terminal benutzerspezifisch gespeichert wird. Zu diesem Zweck kann beispielsweise vorgesehen sein, dass bei einem jeweiligen Neustart des Terminals der Benutzer ausgewählt bzw. eingegeben werden muss. Bei der Eingabe eines unbekannten Benutzers bzw. der Neueingabe eines Benutzers kann dementsprechend vorgesehen sein, dass das Inbetriebnahmemenü aufgerufen wird, um Informationen bzgl. der Einstellung des Terminals von dem unbekannten Benutzer abzufragen.

In einer vorteilhaften Weiterbildung der Erfindung ist vorgesehen, dass das Terminal bei der Menüauswahl maschinenspezifische Einstellparameter abfragt und das Terminal bei dessen Start insbesondere nach einem Wechsel des Benutzers die gewählten Einstellparameter an die landtechnische Maschine, vorzugsweise einen Jobrechner der landtechnischen Maschine, zur Verwendung bei der Feldarbeit überträgt. Auf diese Weise können für verschiedene landtechnische Maschinen bevorzugte Einstellparameter hinterlegt und bei der jeweiligen Verwendung der landtechnischen Maschine diese gespeicherten Einstellparameter aufgerufen und verwendet werden. Beispielsweise kann die angekoppelte landtechnische Maschine jeweils mittels einer ISOBus-Verbindung zwischen Terminal und Jobrechner der landtechnischen Maschine erkannt und die gespeicherten Einstellparameter von dem Terminal an den Jobrechner der landtechnischen Maschine übermittelt werden. Dies ermöglicht es die landtechnische Maschine zügig und ohne unnötigen Konfigurationsaufwand in Betrieb zu nehmen.

## Patentansprüche

1. Terminal zur Steuerung einer landtechnischen Maschine, wobei das Terminal über einen Bildschirm und Eingabemittel, vorzugsweise einen berührungsempfindlichen Bildschirm, verfügt,
**dadurch gekennzeichnet, dass**,
bei der ersten Inbetriebnahme des Terminals mittels eines Inbetriebnahmemenüs Informationen vom Nutzer zur Einstellung des landwirtschaftlichen Terminals abgefragt und Einstellparameter des Terminals entsprechend der jeweiligen Menüauswahl mittels der Eingabemittel eingestellt werden.

2. Terminal nach Anspruch 1, **dadurch gekennzeichnet, dass** das Inbetriebnahmemenü bei einem Wechsel des Benutzers erneut aufrufbar und die jeweilige Menüauswahl durch das Terminal benutzerspezifisch gespeichert wird.

3. Terminal nach Anspruch 1 oder 2, **dadurch gekennzeichnet, dass** das Terminal bei der Menüauswahl maschinenspezifische Einstellparameter abfragt und das Terminal bei dessen Start insbesondere nach einem Wechsel des Benutzers die gewählten Einstellparameter an die landtechnische Maschine, vorzugsweise einen Jobrechner der landtechnischen Maschine, zur Verwendung bei der Feldarbeit überträgt.
